# EUROPÄISCHE PATENTSCHRIFT

(11) **EP 4 234 959 B1**
(45) Veröffentlichungstag und Bekanntmachung des Hinweises auf die Patenterteilung: **04.12.2024**
(21) Anmeldenummer: 22158228.1
(22) Anmeldetag: 23.02.2022
(51) Int. Cl.: F16B 25/00

(54) **SCHRAUBE MIT IM GEWINDE EINGEBETTETEM FRÄSABSCHNITT**
SCREW WITH MILLING SECTION EMBEDDED IN THREAD
VIS POURVUE DE SECTION FRAISEUSE NOYÉE DANS LE FILETAGE

(43) Veröffentlichungstag der Anmeldung: 30.08.2023
(73) Patentinhaber: SFS Group International AG, 9435 Heerbrugg (CH)
(72) Erfinder: Keller, René, 9444 Diepoldsau (CH)

(56) Entgegenhaltungen:
- EP-A1- 3 617 533
- JP-A- 2000 002 218

## Beschreibung

Die vorliegende Erfindung befasst sich mit einer Schraube, die ausgelegt ist für die Befestigung von Metallbauteilen wie Trapez- oder Wellblechen auf Unterkonstruktionen aus Holz, sowohl in der Fläche wie auch an den überlappenden Stossbereichen von Blechtafeln. Sie findet Anwendung an Fassaden bzw. auf Dächern.

### HINTERGRUND

Zum Bedecken von Fassaden und Dächern werden häufig Blechtafeln, insbesondere Well- oder Trapezblechtafeln verwendet. Es ist bekannt, solche Abdeckbleche oder Abdeckungen mit Hilfe von Schrauben an einer Unterkonstruktion aus Holz, beispielsweise Balken, Latten oder Sparren, zu befestigen. Aus wirtschaftlichen Gründen ist es wünschenswert, dass diese Blechtafeln (aus Aluminium, verzinktem und/oder lackiertem Stahlblech o.ä.) ohne Vorbohren direkt auf der Unterlage befestigt werden können. Deswegen muss eine dafür vorgesehene Schraube in der Lage sein, diese Bleche einerseits zu durchdringen und sich danach noch sicher in der Holzunterkonstruktion zu verankern.

Dies lässt sich durch Verwenden einer Bohrschraube mit angeformter Bohrspitze erreichen. Ein bekanntes Begleitproblem sind jedoch die beim Durchdringen der Blechtafeln entstehenden metallischen Bohrspäne, weil diese eigens entfernt werden müssen, um deren Korrosion zu verhindern.

Es ist bekannt, statt einer angeformten Bohrspitze eine gehärtete Gewindespitze einzusetzen, die eine verminderte Neigung zur Spanbildung zeigt. Häufig kommen auch Bimetall-Schrauben zum Einsatz aus Edelstahl mit einer angeschweissten Spitze aus gehärtetem Kohlenstoffstahl. Mit Gewindespitze ist gemeint, dass das Gewinde vom Schaft auf die Spitze reicht und dort mehr oder weniger weit bis an die Spitze geführt wird. Beim Einsatz der Schraube wird das Metall der Blechtafel nicht spanend abgetragen, sondern verdrängt und verformt. Das Gewinde auf dem Konus der Gewindespitze schneidet zusätzlich ein Gewinde in das verdrängte Metall und unterstützt damit den Vortrieb der Schraube.

### STAND DER TECHNIK

Die EP 3 617 533 A1 zeigt eine Schraube für die Befestigung von Metalltafeln auf Holz. Sie besitzt ein Gewinde, das sich von der Schraubenspitze über den Konus bis auf den Schaft erstreckt und im Konusbereich als Doppelgewinde ausgeführt ist. Auf dem Konus weist das Gewinde breitere Flankenwinkel auf als auf dem Schaft.

Ferner ist aus der DE 10 2012 215 645 eine Bimetall-Schraube bekannt mit einem Gewinde, das von der Gewindespitze bis auf den Schaft geführt ist. Es ist im Konusbereich als Blechgewinde ausgeführt und im Schaftbereich als Holzgewinde.

Weiterhin lehrt die Offenlegungsschrift DE 27 32 695, dass es für ein in Metall selbstschneidendes und gewindefurchendes Befestigungselement mit einer gewindetragenden Spitze ein Vorteil ist, wenn die Gewindehöhe vom Übergang zwischen Schaft und Spitze allmählich bis zum Auslauf abnimmt. Das Gewinde ist mehrgängig ausgeführt und ein Gewindezug reicht auslaufend bis zur Spitze der gewindefurchenden Schraube.

Im Stand der Technik sind viele einzelne Elemente von Schraubendesigns bekannt - Bimetallausführung, Gewindespitze, Doppelgewinde -, die in wechselnden Kombinationen und Grössen(verhältnissen) für den beschriebenen Anwendungszweck eingesetzt wurden. Die Aufgabe der Erfindung besteht darin, eine in der Herstellung günstige, leistungsfähige und vor allem in der Handhabung vereinfachte und sichere Schraube vorzuschlagen.

### BESCHREIBUNG DER ERFINDUNG

Diese Aufgabe wird durch eine besonders effektive, nutzeroptimierte Ausführung einer gattungsgemässen Schraube gelöst, wie von den Merkmalen des unabhängigen Anspruchs 1 beschrieben. Die Unteransprüche beschreiben weitere Varianten und Ausführungsbeispiele.

Eine gattungsgemässe Schraube umfasst folgende, ineinander übergehende bzw. aneinander angrenzende Funktionsabschnitte, beschrieben von der Schraubenspitze zum Schraubenkopf: Eine als Konus geformte Gewindespitze, die ein Doppelgewinde trägt, wobei dieses Doppelgewinde ein Hauptgewinde und ein Sekundärgewinde umfasst. Daran anschliessend ist ein im Wesentlichen zylindrischer Fräsabschnitt angeordnet. Seine Eigenschaft geht auf eine Vielzahl von Fräsrippen zurück, die als Steilgewinde ausgeführt sind. Deren Aussendurchmesser D_{F} wird über die Rippen gemessen, ähnlich wie bei einem Gewinde. Nachfolgend, entlang der Schraubenlängsachse, findet sich ein im Wesentlichen zylindrischer, nur das Hauptgewinde tragender Schaftabschnitt, in der der Gewindeaussendurchmesser D_{N} beträgt. Weiterhin folgt ein im Wesentlichen zylindrischer, glatter, gewindefreier Schaftabschnitt. Die Schraube schliesst ab mit einem Kopfabschnitt mit einem Kraftangriff.

Mit dem Begriff "ineinander übergehend bzw. aneinander angrenzend" wird ausgedrückt, dass die beschriebenen Bereiche strukturell und/oder funktionell identifiziert werden können, technisch gesehen bzw. technisch bedingt aber nicht eine harte Grenze aufweisen müssen.

So können z.B. Gewindeabschnitte am Übergang zwischen zwei Bereichen beiden zugeordnet werden. Auch können fliessende Übergänge vorhanden sein, was aber der Unterscheidung bzw. Identifizierung der genannten Funktionsabschnitte keinen Abbruch tut. Mit Schaftabschnitt (gewindetragend, gewindefrei), Längsabschnitt, Fräsabschnitt sind eben jene Bereiche einer Schraube gemeint, die einen Funktionsabschnitt charakterisieren.

Die Verwendung von Schabekanten, Fräsrippen bzw. Schabenuten, wie bei der Erfindung im funktionellen Fräsabschnitt genutzt, ist bekannt. Sie können verschiedentlich orientiert werden, z. B. in etwa parallel zur Schraubenachse am Schaft angeordnet. Alternativ zur achsparallelen Anordnung kann auch ein Steilgewinde als Fräsabschnitt realisiert werden. Das Steilgewinde kann rechtsdrehend (wie das Hauptgewinde, jedoch mit wesentlich höherer Steigung) wie auch linksdrehend realisiert werden.

Beide Konzepte verringern die Spaltwirkung der Schraube beim Durchdringen von Holz, weil der Fräsabschnitt die Faserstruktur des Holzes lokal zerstört. Dies bewirkt, dass die Spannungen, die durch den Konus auf das Holz wirken, weniger tief in das Material abgeleitet werden (müssen). Zudem kann das aufgefräste Material leichter in die vertieften Abschnitte zwischen den Gewindezügen verdichtet werden, was wiederum auch das nötige Drehmoment beim Setzen der Schraube verringern hilft.

Mit dem Begriff Konus als Formangabe für die Gewindespitze ist eine kegelige, insbesondere spitz-kegelige Grundform der Gewindespitze ohne Berücksichtigung des darauf angebrachten Gewindes gemeint. Ferner ist der Konus nicht als die exakt geometrisch-mathematische Form gemeint, sondern die technisch realisierbare bzw. in der Schraube als Konus realisierte und identifizierbare Form gemeint.

Die Schraube wird, wie im Stand der Technik, über einen der vielen bekannten Kraftangriffe im Kopfabschnitt angetrieben. Weit verbreitet sind bei dieser Anwendung Aussen-Sechskant-Köpfe, aber es können auch hexlobe, Innen-Sechskant oder vergleichbare Kraftangriffe zum Einsatz kommen. Der Schraubenkopf kann an seiner zum Schaft gerichteten Unterseite eine plane Anschlagfläche bieten, z.B. zur Verwendung mit einer Unterlagscheibe, einer Dichtscheibe oder beidem. Je nach Anwendungsfall sind aber auch andere Ausführungsformen möglich.

Die vorliegende Erfindung zeichnet sich zum einen dadurch aus, dass das Hauptgewinde ununterbrochen und mit gleichbleibender Steigung vom Spitzenabschnitt des Konus (Gewindespitze) über den Fräsabschnitt bis zum kopfseitigen Ende des gewindetragenden Schaftabschnitts verläuft. Durch die Verwendung des Begriffs Spitzenabschnitt statt Spitze des Konus soll ausgedrückt werden, dass die Spitze einer solchen Schraube herstelltechnisch variieren (z.B. verformt sein) kann. Schrauben werden in aller Regel als Massenprodukte hergestellt, was dazu führt, dass bei einer Schraube das spitze Ende des Konus nicht mathematisch perfekt durchgängig herstellbar ist oder durch nachfolgende Prozessschritte in ihrer Form verändert oder beeinträchtigt werden kann. Dies tut der Funktionalität aber keinen Abbruch. Mit Spitzenabschnitt ist also zusammengefasst der technische Endbereich der Gewindespitze gemeint von wenigen mm Länge.

Weiterhin zeichnet sich die Erfindung dadurch aus, dass die (Fräs-)Rippen des Fräsabschnitts so im Gewindegrund des durchlaufenden Hauptgewindes versenkt angeordnet sind, dass die Gewindespitzen des durchlaufenden Hauptgewindes mit nominellem Aussendurchmesser D_{B} die Fräsrippen überragen. Somit gilt D_{F} < D_{B}. Hier ergibt sich durch die Anordnung des Fräsabschnitts auf dem zylindrischen Schaft statt auf dem Konus eine funktionale Trennung zwischen dem Eindring- und Aufweitabschnitt, sprich, dem Konus und dem Fräsabschnitt. Aus dem Anwendungsprofil wird klar, dass der Konus die Metallbleche möglichst spanlos durchdringen soll und ein Gewinde schneidet, während der Fräsabschnitt seine Aufgabe im Holz der Unterkonstruktion verrichten soll. Damit lässt sich auch das Risiko vermindern, dass der Fräsabschnitt im Metall unerwünscht zum Einsatz kommt.

Wie erwähnt, läuft das Hauptgewinde vom Konus ununterbrochen über den Fräsabschnitt in den gewindetragenden, zylindrischen Schaftabschnitt. Das hat den Vorteil, dass das Gewinde, das von der Gewindespitze in das Metall der Blechplatten gefurcht wurde, durchgängig wirksam bleibt und die Führung vom Konus bis auf den gewindetragenden Schaftabschnitt ohne Unterbruch möglich ist. Auch dies trägt zur Vermeidung von Metallspänen bei.

Eine alternative, ergänzende Gestaltung dieser Schraube sieht vor, zwischen dem gewindefreien Schaftabschnitt und dem Kopfabschnitt einen Haltegewindeabschnitt anzuordnen, gefolgt von einem kurzen (im Sinne von wenigen Millimetern) gewindefreien Unterkopfabschnitt. Der Haltegewindeabschnitt wird ausgeführt als kurzes Haltegewinde mit 1 bis 3 Windungen. Bevorzugt wird das Haltegewinde als Doppelgewinde ausgeführt. Die Steigung des Haltegewindes ist grösser als die des Hauptgewindes; hier sind bevorzugt das 1.6 bis 1.9 fache der Steigung des Hauptgewindes. Ebenso kann die Flankengeometrie des Haltegewindes asymmetrisch gewählt werden, wobei die dem Kopf zugewandte Flanke steiler ausgeführt wird als die zur Gewindespitze weisende Flanke. Dies verbessert die Auflage der durchbohrten Metallplatte.

Durch diese Ergänzung kann gewährleistet werden, dass eine durchbohrte Metallplatte beim Eindrehen, wenn sie den Unterkopf-Gewindeabschnitt erreicht, wegen dessen höherer Steigung schneller in Richtung Kopf gezogen wird, als sich die Schraube als Ganzes in die Unterkonstruktion einsenkt. Ferner wird durch den gewindefreien Unterkopfabschnitt eine Aufnahmezone für die durchbohrte Metallplatte geschaffen, ohne dass das durchlaufene Gewinde beim Weiterdrehen die Metallplatte auffräst bzw. ausreisst. Abgesehen von Dichtigkeitsproblemen könnte sonst eine unerwünschte Spanbildung auftreten. Somit wird letztendlich die Metallplatte zwischen dem kopfseitigen Unterkopfgewinde-Auslauf gehalten bzw. geklemmt. Durch die Ausführung als Doppelgewinde verbessert sich die Qualität der Auflage auf dem dann zweifach vorhandenen Gewindeauslauf.

Die Schraube wird bevorzugt so ausgelegt, dass die Länge des gewindefreien Unterkopfabschnittes und des Haltegewindeabschnitts jeweils zwischen 2mm und 5mm beträgt. Wie erwähnt, kann die vorliegende Schraube auch genutzt werden, um im gewindefreien Unterkopfabschnitt eine Unterlagscheibe/Dichtscheibe zusätzlich unterzubringen. Die Länge des Abschnitts wird der Fachmann entsprechend dem Einsatzprofil wählen.

Für beide beschriebene Varianten der Schraube gilt, dass das Hauptgewinde bevorzugt symmetrisch ausgelegt ist mit einem Flankenwinkel von 60° ± 3°. Dieser symmetrische Flankenwinkel ergibt gute Auszugswerte in Holz und ist ebenfalls robust genug, um das Gewindefurchen im Metall zu gewährleisten.

Weiterhin bevorzugt wird die erfindungsgemässe Schraube so ausgelegt werden, dass das Sekundärgewinde im Spitzenabschnitt des Konus beginnt und dessen Gewindehöhe kontinuierlich zunimmt und nach der Hälfte der Länge (im Wesentlichen in axialer Richtung betrachtet) des Konus wieder abnimmt und im Übergangsbereich von Konus und Fräsabschnitt ausläuft. Mit Auslaufen ist ein nicht-abruptes Enden des Gewindes gemeint, das durch ein Abnehmen der Gewindehöhe gegen Null realisiert wird.

Die hier beschriebene Schraube wird in einer bevorzugten Variante so ausgelegt, dass der nominelle Durchmesser bzw. Aussendurchmesser D_{N} des Hauptgewindes im (gewindetragenden, zylindrischen) Schaftabschnitt grösser ist als der Aussendurchmesser D_{B} des Hauptgewindes im Fräsabschnitt. In einer bevorzugten Ausführung beträgt der Unterscheid sechs Zehntel Millimeter im Durchmesser. Dadurch wird ebenfalls das Einformen der Schraube erleichtert.

Weiterhin ist bevorzugt, dass bei der hier beschriebenen Schraube die Flankenhöhe vom Hauptgewinde beim Übergang Fräsabschnitt - Konus vom Aussendurchmesser D_{B} ausgehend sich über den sich verjüngenden Konus hinweg stetig verringert und im Spitzenabschnitt des Konus ausläuft. Die Verringerung der Gewindehöhe (bei ansonsten gleicher Gewindegeometrie) bzw. die Zunahme der Gewindehöhe vom Spitzenabschnitt ausgehend, verringert den Widerstand der Schraube beim Eindringen / Umformen der Metallplatte und vereinfacht das Gewindefurchen.

Will man dieses Verhalten der Flankenhöhe geometrisch anschaulich machen, lässt sich das wie folgt realisieren: Man konstruiert einen Kegel, der gebildet wird von den Tangenten an den Gewindespitzen des Hauptgewindes auf dem Konus und deren gemeinsamen Schnittpunkt mit der Schraubenlängsachse. Die Tangenten bilden so eine Einhüllende über die Gewindespitzen in Form eines Kegels. Der gemeinsame Schnittpunkt liegt vor der technischen Spitze der Schraube, aus den oben auch genannten herstelltechnischen Gründen. Der Spitzenwinkel der kegelförmigen Einhüllenden beträgt bevorzugt 35° ± 5°.

Um die Geometrie des Fräsabschnittes besser zu beschreiben, lässt sich am besten die (geometrische) Projektion eines Gewindekammes einer Fräsrippe auf die Schraubenlängsachse heranziehen. Bevorzugt schliesst diese Projektion einen Schnittwinkel von 30° ± 10° ein. Bevorzugt ist die Steigung dieses Steilgewindes negativ, also gegenläufig zum Hauptgewinde. Bildlich gesprochen beschreiben die Fräsrippen ein Steil-Linksgewinde im Gegensatz zur Helix des Hauptgewindes bzw. Doppelgewindes auf Schaft und Konus.

In einer weiteren, bevorzugten Ausführung wird die hier vorliegende Schraube als Bimetallschraube ausgeführt, also mit einem Edelstahlkopf und Schaft und einer angeschweissten Spitze aus Kohlenstoffstahl. Damit wären die zylindrischen Schaftabschnitte B, C, D, (und, sofern vorhanden E, F) und der Kopfbereich G aus Edelstahl gefertigt und der Konus der Gewindespitze aus Kohlenstoffstahl. Technisch wird vor dem Walzen bzw. Rollen des Gewindes an einen Edelstahl-Drahtrohling mit entsprechender Länge ein Abschnitt aus Kohlenstoff angeschweisst und anschliessend die Schraube als Ganzes in der Endform gefertigt.

Wie dem Fachmann geläufig, kann eine solche Schraube bei Bedarf bzw. je nach Einsatzgebiet mit dekorativen bzw. schützenden Überzügen versehen werden. Dazu zählen korrosionshemmende Schichten aus Zink, Zink-Nickel oder anderen Metallen aber auch Lacke, Wachse, Öle und ähnliches. Es ist auch denkbar, solche Überzüge nur in Teilbereichen der Schraube anzubringen, beispielsweise eine an das zu verschraubende Blechprofil angepasste, dekorative Kopflackierung.

### BESCHREIBUNG DER FIGUREN

Figur 1 zeigt eine Seitenansicht einer erfindungsgemässen Schraube in Grundausführung
Figur 2 zeigt eine Seitenansicht einer erfindungsgemässen Schraube erweitert um zusätzliche Schaftabschnitte
Figur 3 zeigt ein vergrössertes Detail des Ausschnittes "Z" aus Figur 1, namentlich die Gewindespitze mit anschliessendem Fräsabschnitt.
Figur 4 zeigt das Detail Y aus Figur 1 mit einem Querschnitt des Hauptgewindes.

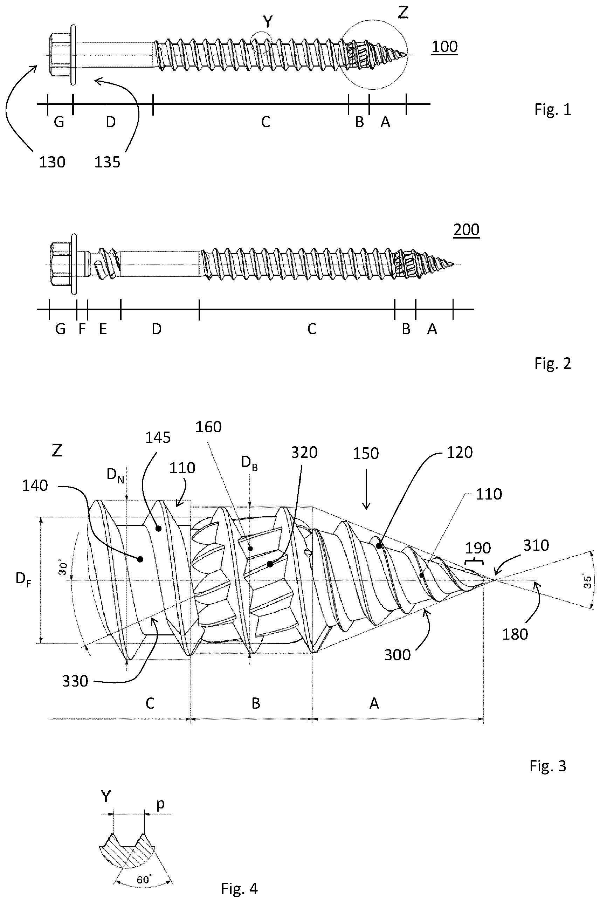

In Figur 1 wird eine erste Ausführungsform einer Schraube 100 gezeigt, mit den grundlegenden Bestandteilen G, D, C, B, A. G stellt den Kopfabschnitt dar mit Kraftangriff 130. Hier ist in Seitenansicht der Kraftangriff 130 als Sechskant dargestellt, der eine Anschlagfläche oder Anschlagunterseite 135 aufweist an seinem dem Schaft zugewandten Ende. Danach folgt, im Bild nach rechts bzw. Richtung Spitze, ein glatter, gewindefreier Schaftabschnitt D, der zylindrisch ausgeführt ist. Die Länge dieses Abschnittes wie auch des nachfolgenden Schaftabschnittes C mit dem Hauptgewinde wird vom Einsatzzweck und der Anwendung bestimmt und daher nach Bedarf ausgelegt und gefertigt. Der gewindetragende Schaftabschnitt C geht über den Fräsabschnitt B und dieser wiederum in den Konus A. Sowohl B wie A werden bei Figur 3 genauer erläutert.

Figur 2 zeigt eine Variante 200 der erfindungsgemässe Schraube, bei der zwischen Kopfabschnitt G und gewindefreiem Schaftabschnitt D zwei weitere funktionelle Bereiche eingeschoben sind. Angrenzend an den Kopfabschnitt G findet sich ein kurzer gewindefreier Unterkopfabschnitt F, gefolgt in Richtung Spitze von einem Stützgewindeabschnitt bzw. Haltegewindeabschnitt E. Letztere weicht vorteilhafterweise von der Gewindegeometrie des Hauptgewindes ab.

Eine Realisierung der erfindungsgemässen Schraube wie in Figur 2 gezeigt hat einen nominellen Durchmesser D_{N} von 6.4mm. Sie wird in verschiedenen Längen gefertigt. In einem typischen Beispiel hat die Schraube eine effektive Länge (Abschnitte A bis und mit F) von 150mm, der Anteil aus Edelstahl beträgt davon 132mm. Die Abschnitte D, E und F haben zusammen ca. 74mm. Für alle Schrauben desselben Durchmessers beträgt die Länge des Abschnitts aus Kohlenstoffstahl ca. 18mm. Für alle Schrauben dieses Durchmessers beträgt die Länge des Abschnitts A ca. 7mm, von Abschnitt B ca. 4mm. Das bedeutet, dass auch ein ca. 7mm langer Abschnitt des mit dem Hauptgewinde versehenen Schaftabschnitts C aus C-Stahl besteht bevor er in Edelstahl weitergeführt wird. Für die genannte Schraube ist eine Steigung des Hauptgewindes von p=2.5mm vorgesehen, die für alle Abschnitte A-C gilt. Der Aussendurchmesser im Abschnitt B D_{N} beträgt ca. 5.8mm.

Figur 3 zeigt detailliert eine Ausführungsform des Vorderabschnitts Z (Ausschnitt aus Figur 1) einer erfindungsgemässen Schraube, für Figur 1 wie 2. In der Zeichnung ist (von links nach rechts), entlang der Längsachse 180 angeordnet, ein angeschnittener Schaftabschnitt C mit Hauptgewinde 110 gezeigt, gefolgt von einem Fräsabschnitt B, der in einen Konus A mit Gewindespitze 150 übergeht. Das Hauptgewinde besteht aus einem Gewindezug mit einem Flankenwinkel von 60° und einer Steigung p (pitch), die wie üblich in mm pro Windung angegeben wird. Figur 4 entspricht dem Ausriss Y von Figur 1 und zeigt einen Ausschnitt aus dem Hauptgewinde 110 im Abschnitt C mit der Angabe des Flankenwinkels und der Steigung p.

In Figur 3 ist exemplarisch eine Windung auf dem Schaftabschnitt C gezeigt mit Gewindegrund 140 und einer Gewindeflanke 145. Der nominelle Durchmesser dieser Schraube D_{N} wird über die Gewindespitzen des Hauptgewindes 110 gemessen und ist in Figur 3 eingezeichnet.

Der Schaftabschnitt C geht, unter Beibehaltung von Steigung und Flankenwinkel, über in den Fräsabschnitt B mit einer geringfügig verringerten Gewindehöhe D_{B} des Hauptgewindes 110. Es gibt zwei Gründe für diese Abnahme: Da die Schraube durch Kaltumformung aus einem zylindrischen Rohling hergestellt wird, steht für jedwede Gewindeausformung nur das lokal vorhandene Grundmaterial zur Verfügung. Zwar lassen sich durch Aufstauchen, z. B. im Bereich des Kopfabschnittes G, auch Verdickungen erzielen, mitten im Schaftbereich wäre das jedoch sehr aufwändig und würde das Gewinderollen komplizieren. Nachdem im Fräsabschnitt B im Gewindegrund die Fräsrippen 160 angeordnet sind, steht für das Hauptgewinde weniger Material zur Verfügung. Zwar könnte durch Verringern der Flankenwinkel des Hauptgewindes 110 in Abschnitt B dieselbe Gewindehöhe wie in Abschnitt C erzielt werden, dies würde aber die Stabilität des Hauptgewindes gerade im Fräsabschnitt kompromittieren.

Eines der erfinderischen Merkmale ist jedoch das kontinuierliche Durchlaufen des Hauptgewindes und die dadurch erzielte nahtlose Führung der Schraube vom verdrängten, gefurchten Metall in das Holz. Daher ist es von Vorteil, im Fräsabschnitt B eher die Gewindehöhe zu reduzieren als den Flankenwinkel. Da beim Setzvorgang der Schraube nach Durchlaufen des Konus A durch die Metallplatte(n), die Schraube vorübergehend einen maximalen Aussen-(Gewinde-) Durchmesser D_{B} aufweist, bedeutet dies, dass das Hauptgewinde dennoch satt in dem selbstgefurchten Kanal greift. Gleichzeitig ist der Einform-Widerstand der Schraube, wenn der Fräsabschnittes B im Holz wirkt, wegen des kleineren Aussendurchmessers D_{B} < D_{N} geringer, wenn man den Anteil des Hauptgewindes alleine betrachtet. Wie Tests ergaben, wird die Führung der Schraube im gefurchten Metallabschnitt nicht beeinträchtigt; die Gewindespitzen des Hauptgewindes wirken im Gegenteil wie Distanzelemente, die die Fräsrippen von den Lochrändern fernhalten. Beim Übergang von Abschnitt B zu C wird das in der Metallplatte gefurchte Loch bzw. Gewindedurchmesser auf D_{N} aufgeweitet - dann hat aber der Fräsabschnitt B die Metallplatte(n) bereits passiert.

Figur 3 zeigt die Fräsrippen 160 so angeordnet, dass die Fräsrippen im Wesentlichen ein steiles Linksgewinde bilden, was die Fräswirkung im Holz verstärkt. Die Linie mit Referenzzeichen 330 markiert die Projektion des Gewindekammes 320 auf die Schraubenlängsachse 180. Die Zeichnung zeigt ebenfalls den Schnittwinkel mit der Schraubenlängsachse 180.

Im Bereich des Konus ist gezeigt, wie das Hauptgewinde 110 unter Beibehaltung der Steigung und des Flankenwinkels langsam vom Durchmesser D_{B} am Übergangsbereich Abschnitt B nach A kontinuierlich zu Null abnimmt und ausläuft im Spitzenabschnitt 190. Markiert ist ebenfalls das Sekundärgewinde 120, das, beginnend im Spitzenabschnitt kontinuierlich wie das Hauptgewinde zunimmt und am Übergangsbereich A nach B wieder ausläuft. Dadurch wird das für das Einformen im Metall vorteilhafte Doppelgewinde auf der Gewindespitze auf dem Konus A erzielt. Die Tangenten an den Gewindekämmen des Hauptgewindes mit einem gemeinsamen Schnittpunkt 310 bilden die Einhüllende 300, wobei der Schnittpunkt 310 auf der Längsachse 180 der Schraube 100 bzw. 200 liegt.

## Patentansprüche

1. Schraube (100), umfassend folgende, ineinander übergehende bzw. aneinander angrenzende Funktionsabschnitte:
- Eine als Konus (A) geformte, ein Doppelgewinde tragende Gewindespitze (150), wobei das Doppelgewinde ein Hauptgewinde (110) und ein Sekundärgewinde (120) umfasst
- Einen im Wesentlichen zylindrischen Fräsabschnitt (B) mit einer als Steilgewinde ausgeführten Vielzahl von Fräsrippen (160), deren über die Rippen gemessene Aussendurchmesser D_{F} beträgt;
- Einen im Wesentlichen zylindrischen, nur das Hauptgewinde (110) tragenden Schaftabschnitt (C), in dem der Gewindeaussendurchmesser D_{N} beträgt;
- Einen im Wesentlichen zylindrischen, glatten, gewindefreien Schaftabschnitt (D)
- Einen Kopfabschnitt (G) mit einem Kraftangriff (130), wobei
- das Hauptgewinde (110) ununterbrochen und mit gleichbleibender Steigung vom Spitzenabschnitt (190) des Konus (A) über den Fräsabschnitt (B) bis zum kopfseitigen Ende des gewindetragenden Schaftabschnitts (C) verläuft; und
- die Rippen des Fräsabschnitts (B) so im Gewindegrund (140) des durchlaufenden Hauptgewindes (110) versenkt angeordnet sind, dass die Gewindespitzen des durchlaufenden Hauptgewindes (110) mit nominellem Aussendurchmesser D_{B} die Fräsrippen (160) überragen so dass gilt D_{F} < D_{B}.

2. Schraube (200) nach Anspruch 1, **dadurch gekennzeichnet, dass** zwischen dem gewindefreien Schaftabschnitt (D) und dem Kopfabschnitt (G) ein Haltegewindeabschnitt (E) angeordnet ist, ausgeführt als kurzer Haltegewinde mit 1 bis 3 Windungen gefolgt von einem kurzen gewindefreien Unterkopfabschnitt (F).

3. Schraube (200) nach Anspruch 2, **dadurch gekennzeichnet, dass** das Haltegewinde als Doppelgewinde ausgeführt ist und die Steigung des Haltegewindes (170) dem 1.6 bis 1.9 fachen des Hauptgewindes (110) entspricht.

4. Schraube (200) nach Anspruch 1 und 2, **dadurch gekennzeichnet, dass** die Länge des gewindefreien Unterkopfabschnittes (F) und des Haltegewindeabschnitts (E) jeweils zwischen 2 und 5mm beträgt.

5. Schraube (100, 200) nach einem oder mehreren der vorhergehenden Ansprüche, **dadurch gekennzeichnet, dass** das Hauptgewinde (110) symmetrisch ausgelegt ist mit einem Flankenwinkel von 60° ± 3°.

6. Schraube (100, 200) nach einem oder mehreren der vorhergehenden Ansprüche, **dadurch gekennzeichnet, dass** das Sekundärgewinde (120) im Spitzenabschnitt (190) des Konus (A) beginnt, die Gewindehöhe kontinuierlich zunimmt und nach der Hälfte der Länge des Konus (A) wieder abnimmt und im Übergangsbereich von Konus (A) und Fräsabschnitt (B) ausläuft.

7. Schraube (100, 200) nach einem oder mehreren der vorhergehenden Ansprüche, **dadurch gekennzeichnet, dass** der Aussendurchmesser D_{N} des Hauptgewindes (110) im Schaftabschnitt (C) grösser ist als Aussendurchmesser D_{B} des Hauptgewindes im Fräsabschnitt (B).

8. Schraube (100, 200) nach einem oder mehreren der vorhergehenden Ansprüche, **dadurch gekennzeichnet, dass** die Flankenhöhe des Hauptgewindes (110) beim Übergang Fräsabschnitt (B) zum Konus (A) vom Aussendurchmesser D_{B} ausgehend, sich über den sich verjüngenden Konus (A) hinweg stetig verringert und im Spitzenabschnitt (190) des Konus (A) ausläuft.

9. Schraube (100, 200) nach einem oder mehreren der vorhergehenden Ansprüche, **dadurch gekennzeichnet, dass** der Spitzenwinkel einer kegelförmigen Einhüllenden (300), gebildet von den Tangenten an den Gewindespitzen des Hauptgewindes (110) auf dem Konus (A), die einen gemeinsamen Schnittpunkt (310) mit der Schraubenlängsachse (180) bilden, 35° ± 5° beträgt.

10. Schraube (100, 200) nach einem oder mehreren der vorhergehenden Ansprüche, **dadurch gekennzeichnet, dass** die Projektion (330) jeweils eines Gewindekammes (320) einer Fräsrippe (160) auf die Schraubenlängsachse (180) mit ihr einen Winkel von 30° ± 10° bildet.

11. Schraube (100, 200) nach einem oder mehreren der vorhergehenden Ansprüche, **dadurch gekennzeichnet, dass** die Schraube (100, 200) als Bimetallschraube ausgeführt ist, wobei die zylindrischen Schaftabschnitte (D), und sofern vorhanden (E) sowie (F), und der Kopfbereich (G) aus Edelstahl gefertigt werden und der Konus (A) und der Fräsabschnitt (B) der Gewindespitze aus Kohlenstoffstahl und die Übergangsstelle zwischen Edelstahl und Kohlenstoffstahl im Hauptgewinde-Schaftabschnitt (C) liegt.

## Claims

1. Screw (100), comprising the following functional sections which merge into one another or adjoin one another:
- a threaded tip (150) formed as a cone (A) and carrying a double thread, wherein the double thread comprises a main thread (110) and a secondary thread (120);
- a substantially cylindrical milling section (B) having a plurality of milling ribs (160) designed as a steep thread, the outside diameter of which, measured over the ribs, is D_{F};
- a substantially cylindrical shank section (C) carrying only the main thread (110), in which the external thread diameter is D_{N};
- a substantially cylindrical, smooth, thread-free shank section (D);
- a head section (G) with a force application (130), wherein
- the main thread (110) extends uninterruptedly and with a constant pitch from the tip section (190) of the cone (A) via the milling section (B) to the head end of the thread-bearing shank section (C); and
- the ribs of the milling section (B) are arranged countersunk in the thread base (140) of the main thread (110) passing through in such a way that the thread tips of the main thread (110) passing through with nominal external diameter D_{B} project beyond the milling ribs (160) so that D_{F} < D_{B} applies.

2. Screw (200) according to claim 1, **characterized in that** a retaining thread section (E) is arranged between the thread-free shank section (D) and the head section (G), designed as a short retaining thread with 1 to 3 turns followed by a short thread-free underhead section (F).

3. Screw (200) according to claim 2, **characterized in that** the retaining thread is designed as a double thread and the pitch of the retaining thread corresponds to 1.6 to 1.9 times the main thread (110).

4. Screw (200) according to claims 1 and 2, **characterized in that** the length of the thread-free lower head section (F) and of the retaining thread section (E) is between 2 and 5 mm in each case.

5. Screw (100, 200) according to one or more of the preceding claims,
**characterized in that** the main thread (110) is designed symmetrically with a flank angle of 60° ±3°.

6. Screw (100, 200) according to one or more of the preceding claims,
**characterized in that** the secondary thread (120) begins in the tip section (190) of the cone (A), the thread height increases continuously and decreases again after half the length of the cone (A) and ends in the transition region of the cone (A) and the milling section (B).

7. Screw (100, 200) according to one or more of the preceding claims,
**characterized in that** the outside diameter D_{N} of the main thread (110) in the shank section (C) is greater than the outside diameter D_{B} of the main thread in the milling section (B).

8. Screw (100, 200) according to one or more of the preceding claims,
**characterized in that** the flank height of the main thread (110) at the transition from the milling section (B) to the cone (A), starting from the outside diameter D_{B}, decreases continuously over the tapering cone (A) and ends in the tip section (190) of the cone (A).

9. Screw (100, 200) according to one or more of the preceding claims,
**characterized in that** the tip angle of a conical envelope end (300), formed by the tangents at the thread tips of the main thread (110) on the cone (A), which form a common intersection (310) with the longitudinal axis (180) of the screw, is 35° ±5°.

10. Screw (100, 200) according to one or more of the preceding claims,
**characterized in that** the projection (330) of a respective thread crest (320) of a milling rib (160) onto the longitudinal axis (180) of the screw forms an angle of 30° ±10° therewith.

11. Screw (100, 200) according to one or more of the preceding claims,
**characterized in that** the screw (100, 200) is designed as a bimetallic screw, wherein the cylindrical shank sections (D), and if present (E) and (F), and the head region (G) are made of stainless steel and the cone (A) and the milling section (B) of the threaded tip are made of carbon steel and the transition point between stainless steel and carbon steel are located in the main threaded shank section (C).

## Revendications

1. Vis (100), comprenant les sections fonctionnelles suivantes, qui se fondent les unes dans les autres ou sont adjacentes les unes aux autres:
- Une pointe filetée (150) formée comme un cône (A) et portant un double filet, le double filet comprenant un filet principal (110) et un filet secondaire (120)
- Une section de fraisage (B) sensiblement cylindrique avec une pluralité de nervures de fraisage (160) réalisées sous forme de filet à pas rapide, dont le diamètre extérieur mesuré sur les nervures est D_{F};
- Une section de tige (C) sensiblement cylindrique, ne portant que le filet principal (110), dans laquelle le diamètre extérieur du filetage est D_{N};
- Une section de tige (D) sensiblement cylindrique, lisse et non filetée;
- Une section de tête (G) avec une prise de force (130),
- le filet principal (110) s'étendant de manière ininterrompue et avec un pas constant depuis la section de pointe (190) du cône (A), en passant par la section de fraisage (B), jusqu'à l'extrémité côté tête de la section de tige (C) portant le filet, et
- les nervures de la section de fraisage (B) étant disposées à fleur dans le fond de filet (140) du filet principal (110) continu de telle sorte que les pointes filetées du filet principal (110) continu avec un diamètre extérieur nominal D_{B} dépassent les nervures de fraisage (160) de sorte que D_{F} < D_{B}.

2. Vis (200) selon la revendication 1, **caractérisée en ce qu'**entre la section de tige (D) non filetée et la section de tête (G) est disposée une section de filet de retenue (E), réalisée sous la forme d'un filet de retenue court comportant de 1 à 3 spires, suivi d'une section de sous-tête (F) courte non filetée.

3. Vis (200) selon la revendication 2, **caractérisée en ce que** le filet de retenue est réalisé sous forme de double filet et le pas du filet de retenue correspond à 1,6 à 1,9 fois le filet principal (110).

4. Vis (200) selon les revendications 1 et 2, **caractérisée en ce que** la longueur de la section de sous-tête (F) non filetée et de la section de filet de retenue (E) est respectivement comprise entre 2 et 5 mm.

5. Vis (100, 200) selon une ou plusieurs des revendications précédentes, **caractérisée en ce que** le filet principal (110) est conçu de manière symétrique avec un angle de flanc de 60° ± 3°.

6. Vis (100, 200) selon une ou plusieurs des revendications précédentes, **caractérisée en ce que** le filet secondaire (120) commence dans la section de pointe (190) du cône (A), la hauteur du filetage augmente de manière continue et diminue à nouveau après la moitié de la longueur du cône (A) et se termine dans la zone de transition entre le cône (A) et la section de fraisage (B).

7. Vis (100, 200) selon une ou plusieurs des revendications précédentes, **caractérisée en ce que** le diamètre extérieur D_{N} du filet principal (110) dans la section de tige (C) est plus grand que le diamètre extérieur Da du filet principal dans la section de fraisage (B).

8. Vis (100, 200) selon une ou plusieurs des revendications précédentes, **caractérisée en ce que** la hauteur de flanc du filet principal (110), lors de la transition entre la section de fraisage (B) et le cône (A), en partant du diamètre extérieur D_{B}, diminue constamment sur le cône (A) qui se rétrécit et se termine dans la section de pointe (190) du cône (A).

9. Vis (100, 200) selon l'une ou plusieurs des revendications précédentes, **caractérisée en ce que** l'angle au sommet d'une enveloppe (300) conique formée par les tangentes aux sommets des filets du filet principal (110) sur le cône (A), qui forment un point d'intersection (310) commun avec l'axe longitudinal de la vis (180), est de 35° ± 5°.

10. Vis (100, 200) selon une ou plusieurs des revendications précédentes, **caractérisée en ce que** la projection (330) de chaque crête de filet (320) d'une nervure de fraisage (160) sur l'axe longitudinal de la vis (180) forme un angle de 30° ± 10° avec celui-ci.

11. Vis (100, 200) selon une ou plusieurs des revendications précédentes, **caractérisée en ce que** la vis (100, 200) est réalisée sous la forme d'une vis bimétallique, les sections de tige (D) cylindriques, et, le cas échéant, (E) ainsi que (F), et la zone de tête (G) étant fabriquées en acier inoxydable, et le cône (A) et la section de fraisage (B) de la pointe filetée étant en acier au carbone et le point de transition entre l'acier inoxydable et l'acier au carbone étant situé dans la section de tige du filet principal (C).
